# EUROPEAN PATENT APPLICATION

(11) **EP 4 653 505 A1**
(43) Date of publication of application: **26.11.2025**
(21) Application number: 24864589.7
(22) Date of filing: 09.09.2024
(51) Int. Cl.: C09D 175/04, C09D 7/65, C08G 18/61

(54) **COATING COMPOSITION, MATERIAL PRODUCT THEREOF, KIT, AND USE METHOD**

(30) Priority: 05.07.2024 CN 202410904143
(71) Applicant: Mega P&C Advanced Materials (Shanghai) Co., Ltd., Shanghai 201801 (CN)
(72) Inventor: LIU, Zhengwei, Shanghai 201801 (CN); LIU, Baoying, Shanghai 201801 (CN)
(74) Representative: Ran, Handong
(86) International application number: PCT/CN2024/117833
(87) International publication number: WO 2025/055869

(57) **Abstract**

The present invention relates to the field of coating materials, and discloses a coating composition, as well as coated material products, kits, and methods of use thereof, characterized by environmental friendliness and high efficiency in application. The coating composition comprises a Base Component A and a Curing Agent B. The Base Component A includes a silane small molecule containing a siloxane group and/or silane oligomers containing a siloxane group, while the Curing Agent B includes a small molecule containing an isocyanate group and/or a polymer containing a monomer containing at least one isocyanate group. The coating composition cross-links and cures in the presence of water molecules to form a coating film with excellent physical and chemical properties. In addition, the present invention also discloses coated material products, kits, and methods of use based on this coating composition, which are suitable for a variety of industrial and commercial applications.

## Description

This application claims priority to the Chinese patent application filed on July 5, 2024, titled "Coating Composition and its Coated Material Products, Kits, and Methods of Use," with the application number 202410904143.9. The entire content of the Chinese patent application is incorporated by reference into this application.

### Technical Field

The present invention relates to the field of coating and coating materials, particularly to a coating composition and its coated material products, kits, and methods of use.

### Technical Background

The coating composition systems include epoxy resin systems, polyurethane systems, and polyurea systems, etc. Among these, polyurethane coating exhibits excellent adhesion, toughness, humidity resistance, chemical resistance, UV resistance, and weather resistance on many substrates (such as metals, wood, leather, masonry, etc.). However, the vast majority of polyurethane coatings require the involvement of solvents during the synthesis process. Since the organic solvents used in the synthesis of traditional polyurethane coatings are highly volatile, it poses risks to human health and environmental safety. As a result, some research has focused on the study and application of water-based polyurethane coatings. However, not all polymers are completely soluble in water, and the high latent heat of evaporation of water complicates the coating solidification and drying processes. Therefore, much research has been directed toward achieving high-solid, ultra-high-solid, and even solvent-free polyurethane coatings.

Generally, solvent-free polyurethane system has high viscosity, leading to issues such as short pot life (<30 minutes) due to rapid exothermic reactions and side reactions, coating foaming failure, severe surface defects, and even non-curing.

Therefore, there remains a massive demand in the industry for coating compositions with comprehensive performance (e.g., high corrosion resistance, high weather resistance), convenient application (e.g., low viscosity, sprayable, controllable pot life), and environmental friendliness (low VOC emissions).

### Summary of the Invention

In view of the deficiencies of existing coating compositions, the present invention provides a novel coating composition. It has the advantages of high operability (low viscosity for easy spraying, adjustable curing rate, and controllable pot life) and environmental friendliness, along with the comprehensive properties of the cured paint film (such as high corrosion resistance, high weather resistance, and high adhesion to substrates, etc.). In addition, the present invention also provides products, kits and methods of use based on this coating composition.

To achieve the above purposes, the present invention provides a coating composition comprising the following components:
Base Component A, wherein the Base Component A comprises a silane small molecule containing a siloxane group and/or a silane oligomer containing a siloxane group, and
Curing Agent B, wherein the Curing Agent B comprises a small molecule containing an isocyanate group and/or a polymer containing a monomer containing at least one isocyanate group.

Furthermore, the above-mentioned coating composition of the present invention additionally satisfies at least one or more of the following conditions:
the molar ratio of the siloxane group in said Base Component A to the isocyanate group in said Curing Agent B is from 1 to 10, preferably from 1 to 5, more preferably from 1.2 to 3, from 1.5 to 3;
said coating composition remains in a liquid state under an anhydrous condition;
under normal temperature and pressure and in the absence of a catalyst, said silane small molecule containing a siloxane group and/or said silane oligomer containing a siloxane group does not undergo a one-step addition reaction with said small molecule containing an isocyanate group and/or said polymer of a monomer containing at least one isocyanate group;
said silane small molecule containing a siloxane group and/or said silane oligomer containing a siloxane group do not contain an active hydrogen;
said coating composition also comprises Catalyst C, which comprises at least one catalyst capable of catalyzing the addition reaction between a hydroxyl group of an alkyl alcohol and an isocyanate group; or
said coating composition also comprises Functional Component D comprises components with toughening, plasticizing, or compatibilizing functions, which comprises a hydroxyl-terminated polydimethylsiloxane, a hydroxyl acrylic resin, or a bisphenol A based epoxy resin.

Furthermore, in said coating composition of the present invention, said Base Component A may additionally satisfy at least one or more of the following conditions:
it remains in a liquid state within the temperature range of -50°C to 90°C;
said silane small molecule containing a siloxane group is selected from at least one of the following: alkoxysilanes containing a saturated alkyl group, alkoxysilanes containing an ester group, alkoxysilanes containing an aromatic hydrocarbon group, alkoxysilanes containing an unsaturated hydrocarbon group, or alkoxysilanes containing an epoxy group. Preferably, they are selected from one or more of the following: methacryloxypropyltrimethoxysilane, trimethoxyphenylsilane, vinyltrimethoxysilane, (3-glycidyloxypropyl)trimethoxysilane, methyltrimethoxysilane, dimethyldimethoxysilane, dimethoxymethylphenylsilane, diphenyldimethoxysilane, methacryloxypropyltriethoxysilane, triethoxyvinylsilane, phenyltriethoxysilane, (3-glycidyloxypropyl)triethoxysilane, methyltriethoxysilane, diethoxydimethylsilane, diphenyldiethoxysilane, or methylphenyldiethoxysilane. More preferably, is selected from one or more of the following: vinyltrimethoxysilane, dimethyldimethoxysilane, methacryloxypropyltrimethoxysilane, (3-glycidyloxypropyl)trimethoxysilane, or trimethoxyphenylsilane;
said silane oligomer containing a siloxane group is polymerized from at least one monomer containing a siloxane group with a degree of polymerization of 2 to 20;
the viscosity of said silane oligomer containing a siloxane group is in the range of 10 centipoise to 10,000 centipoise at 25°C; or
said silane oligomer containing a siloxane group is polymerized from one or more types of monomers selected from alkoxysilanes containing a saturated alkyl group, alkoxysilanes containing an ester group, alkoxysilanes containing an aromatic hydrocarbon group, alkoxysilanes containing an unsaturated hydrocarbon group, or alkoxysilanes containing an epoxy group. Preferably, it is polymerized from monomers including one or more selected from vinyltrimethoxysilane, dimethyldimethoxysilane, methacryloxypropyltrimethoxysilane, (3-glycidyloxypropyl)trimethoxysilane, and trimethoxyphenylsilane.

Furthermore, in the above-mentioned coating composition of the present invention, said Curing Agent B may additionally satisfy at least one or more of the following conditions:
it remains in a liquid state in the range of - 50°C to 100°C;
said small molecule containing an isocyanate group is selected from an aromatic isocyanate or an aliphatic isocyanate;
said polymer containing a monomer containing at least one isocyanate group is selected from an aromatic isocyanate polymer or an aliphatic isocyanate polymer;
the viscosity of said polymer containing a monomer containing at least one isocyanate group is less than 10,000 centipoise at 40°C; or
said molecular weight of the polymer containing a monomer containing at least one isocyanate group is from 150 to 5000 g/mol.

Furthermore, in the above-mentioned coating composition of the present invention, said coating composition also comprises Catalyst C and said Catalyst C may additionally satisfy at least one or more of the following conditions:
said Catalyst C is a polyurethane catalyst, preferably a metallic salt-based polyurethane catalyst or a tertiary amine polyurethane catalyst; or
said Catalyst C is a catalyst having a delay function, preferably a composition of a metallic salt-based polyurethane catalyst and its complexing agent.

The present invention also provides another coating composition, which comprises:
Base Component A, which comprises one or more of methacryloxypropyltrimethoxysilane, trimethoxyphenylsilane, vinyltrimethoxysilane, or (3-glycidyloxypropyl)trimethoxysilane;
Curing Agent B, which comprises one or more of diphenylmethane diisocyanate or its polymer, hexamethylene diisocyanate or its polymer, or toluene diisocyanate or its polymer,
Catalyst C, which comprises one or more of dibutyltin dilaurate (DBTL), 2,4,6-tris [(dimethylaminomethyl)] phenol (DMP-30), or 1,8-diazabicyclo[5,4,0]undec-7-ene (DBU);
wherein, the molar amount of siloxane group of said Base Component A: the molar amount of isocyanate group of said Curing Agent B = 1: (0.1~1);
the mass ratio of said Catalyst C to the coating composition is no more than 5%, preferably no more than 1%, and more preferably no more than 0.2%.

The present invention also provides another coating composition, comprising:
Base Component A, which comprises a silane small molecule containing a siloxane group and/or a silane oligomer containing a siloxane group; and
Curing Agent B, which comprises an aromatic isocyanate and/or its polymer.

Furthermore, in the above-mentioned coating composition of the present invention, said silane small molecule containing a siloxane group and/or said silane oligomer containing a siloxane group do not undergo a one-step addition reaction with said aromatic isocyanate and/or its polymer under normal temperature and pressure and in the absence of a catalyst.

The present invention also provides a coated material product, which comprises a substrate and a coating in contact with the surface of said substrate, wherein said coating is prepared from said coating composition provided by the present invention under an aqueous condition.

The present invention also provides a coating kit, which comprises the components of said coating composition provided by the present invention, wherein the components are physically separated from each other, or mixtures of some components are physically separated from the other components. Preferably, Base Component A and Curing Agent B are physically separated from each other (e.g., in individual packages).

Wherein, said coating kit may also comprise a substrate; optionally, said coating kit may also comprise an instruction for use.

The present invention also provides a method of using said coating composition described above, which comprises a step of applying said coating composition provided by the present invention to the surface of a substrate under an aqueous condition.

The present invention also provides a product coated with said coating prepared by the method described above.

The technical solution provided by the present invention has the following characteristics and beneficial effects:
(1). One of the components that triggers the reaction is water, especially moisture in the air. In theory, before use, the coating composition does not undergo the main reaction in the original container. This prevents the coating composition from cross-linking too fast in the container, thereby achieving advantages of low viscosity, good application properties, and sprayable;
(2). the present invention utilizes the reaction between the alkyl alcohol produced by silane condensation and isocyanate, allowing the alkoxy group to be transferred to the urethane group through an exchange mechanism. This addresses the primary VOC emission issue of alkyl alcohol in the reaction process of commercially available condensation-type silicone polymers. The optimized formulation of the present invention can theoretically achieve zero VOC emission;
(3). the isocyanate curing agent integrates the formulation advantages of polyurethane systems, with adjustable pot life and curing speed, and a wide variety of catalysts;
(4). through the rational selection of components, the paint film can effectively achieve weather resistance and good gloss and color retention (comparable to that of fluorocarbon or slightly lower than fluorocarbon, higher than that of polyurethane);
(5). by the rational selection of components, the paint film can effectively achieve corrosion resistance, corrosion resistance-salt spray, humidity resistance, and chemical resistance, in compliance with the standards of the container industry;
(6). the raw materials are readily available and cost-effective.

### Drawings

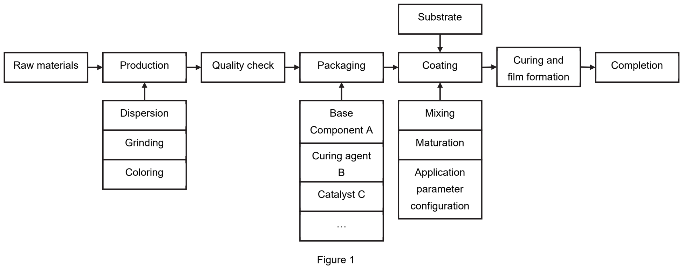

Fig. 1 is a process flow chart for the production and use of a representative coating composition.

### Embodiments

The technical solutions in the embodiments of the present invention will be clearly and completely described below. Apparently, the embodiments described are only a part of the embodiments of the present invention, rather than all of them. Based on the embodiments of the present invention, all other embodiments obtained by those skilled in the art without creative efforts shall fall within the protection scope of the present invention.

In the present invention, the technical solutions of various embodiments can be combined with each other, but it must be based on the ability of those skilled in the art to implement them. When the combination of technical solutions is contradictory or cannot be implemented, it should be considered that such a combination of technical solutions does not exist and is not within the protection scope required by the present invention.

The term "composition" in the present invention refers to one consisting of two or more components, which can be a mixture blended together, or a combination where the components are physically separated.

The term "kit" in the present invention refers to one consisting of two or more parts, which is a combination of parts that are physically separated from each other, or a combination of a mixture of some of the components and the other components wherein the mixture and the other components are physically separated from each other.

The term "coating" in the present invention refers to any methods of applying a coating composition to the surface of a substrate, such as spraying, brushing, rolling, flow coating, etc. Those skilled in the art can determine the method based on the characteristics of the coating composition, the desired coating properties, the application environment, and cost-effectiveness, etc.

The term "siloxane group" in the present invention refers to an alkoxy functional group that is directly covalently bonded to a silicon atom.

The term "normal temperature and pressure" in the present invention refers to a condition with a temperature of 25 degrees Celsius and a pressure of 101.325 kPa (1 standard atmosphere, 760 mmHg).

The term "active hydrogen" in the present invention refers to hydrogen atoms that can participate in chemical reactions under normal temperature and pressure in the absence of a catalyst.

The term "pot life" in the present invention refers to the period of time during which the coating composition can be manipulated or processed after mixing. Those skilled in art can determine this by common methods as required. The specific period of time may vary depending on the types of components in the coating composition, the testing methods, the application scenarios, and the manufacturer's specifications.

The term "curing rate" in the present invention refers to the speed at which the coating composition cures or hardens after application, and it can be used to describe the time required for the coating composition to cure into a paint film after application. Generally speaking, in addition to the inherent properties of the coating composition, the curing rate is also affected by environmental factors such as temperature, humidity and ventilation conditions. Under normal circumstances, higher temperature, higher humidity and sufficient ventilation will accelerate the curing rate of the coating composition.

The term "dry to hard time" in the present invention refers to the time recorded by pressing a finger on the surface of the coating and assessing the surface dryness based on whether there is still tackiness or adhesion.

The term "complete curing time" in the present invention refers to the time required for the organic volatile components in the coating to be substantially evaporated out and for the cross-linking and curing reactions of the coating components to be substantially completed (or fully completed), such that the degree of coating cure has reached the intended use target, i.e., the paint film's properties have reached or exceeded the target values.

In the present invention, expressions involving numerical ranges are generally understood to include the endpoint values (the number itself), unless explicitly stated as "greater than (>)" or "less than (<)." For example, the term "no more than" used in the present invention includes the endpoint value, meaning less than or equal to a certain endpoint value; "A to B" or "A~B" includes the endpoint values A and B.

In some embodiments, the coating composition of the present invention comprises the following components:
Base Component A, which includes a silane small molecule containing a siloxane group and/or a silane oligomer containing a siloxane group, and Curing Agent B, which includes a small molecule containing an isocyanate group and/or a polymer containing a monomer containing at least one isocyanate group; wherein, the molar ratio of the siloxane group in Base Component A to the isocyanate group in Curing Agent B is from 1 to 10.

In some specific embodiments, the above-mentioned coating composition of the present invention further comprises:
Catalyst C, which comprises at least one catalyst capable of catalyzing the addition reaction between a hydroxyl group of an alkyl alcohol and an isocyanate group.

In some specific embodiments, said Curing Agent B includes an aromatic isocyanate and/or its polymer.

In some embodiments, the coating composition of the present invention includes the following components:
Base Component A, which comprises a silane small molecule containing a siloxane group and/or a silane oligomer containing a siloxane group, and Curing Agent B, which comprises a small molecule containing an isocyanate group and/or a polymer containing a monomer containing at least one isocyanate group; wherein, the silane small molecule containing a siloxane group and/or the silane oligomer containing a siloxane group in Base Component A does not contain an active hydrogen that can undergo a one-step addition reaction with the small molecule containing an isocyanate group and/or the polymer containing a monomer containing at least one isocyanate group in Curing Agent B.

In some specific embodiments, the above-mentioned coating composition of the present invention further comprises:
Catalyst C, which comprises at least one catalyst capable of catalyzing the addition reaction between a hydroxyl group of an alkyl alcohol and an isocyanate group.

In some specific embodiments, Curing Agent B comprises an aromatic isocyanate and/or its polymer.

In some embodiments, under normal temperature and pressure and in the absence of a catalyst, the silane small molecule containing a siloxane group and/or the silane oligomer containing a siloxane group in the Base Component A does not undergo a one-step addition reaction with the small molecule containing an isocyanate group and/or a polymer containing a monomer containing at least one isocyanate group in Curing Agent B.

In some embodiments, the silane small molecule containing a siloxane group and/or the silane oligomer containing a siloxane group in Base Component A does not contain an active hydrogen.

In some embodiments, the solvent-free composition remains in a liquid state under an anhydrous condition. Specifically, when the coating composition is in a single mixed form, it remains in a liquid state under an anhydrous condition.

According to some embodiments of the technical solution provided by the present invention, Base Component A mainly comprises a silane small molecule containing a siloxane group and/or a silane oligomer containing a siloxane group, which are the main raw material components for forming a paint film after cross-linking and curing.

In some embodiments, Base Component A is in a liquid state in the range of - 50°C to 90°C.

In some embodiments, the silane small molecule containing a siloxane group is selected from at least one of alkoxysilanes with a saturated alkyl group, alkoxysilanes with an ester group, alkoxysilanes with an aromatic hydrocarbon group, alkoxysilanes with an unsaturated hydrocarbon group, or alkoxysilanes with an epoxy group; preferably, it is selected from one or more of methacryloxypropyltrimethoxysilane (KH570), trimethoxyphenylsilane (KH631), vinyltrimethoxysilane (A171), (3-glycidyloxypropyl)trimethoxysilane (KH560), methyltrimethoxysilane (MTMS), dimethyldimethoxysilane, dimethoxymethylphenylsilane, diphenyldimethoxysilane, polyalkyl (CₙH₂ₙ₊₁, n ≤ 16) trimethoxysilane, methacryloxypropyltriethoxysilane, triethoxyvinylsilane, phenyltriethoxysilane, (3-glycidyloxypropyl)triethoxysilane, methyltriethoxysilane, diethoxydimethylsilane, diphenyldiethoxysilane, or methylphenyldiethoxysilane; more preferably, it is selected from one or more of vinyltrimethoxysilane (A171), dimethyldimethoxysilane, methacryloxypropyltrimethoxysilane (KH570), (3-glycidyloxypropyl)trimethoxysilane (KH560), and trimethoxyphenylsilane (KH631).

In some embodiments, the silane oligomer containing a siloxane group is selected from polymers polymerized from one or more types of monomers of alkoxysilanes with a saturated alkyl group, alkoxysilanes with an ester group, alkoxysilanes with an aromatic hydrocarbon group, alkoxysilanes with an unsaturated hydrocarbon group, or alkoxysilanes with an epoxy group; preferably, it is selected from polymers polymerized from one or more monomers of vinyltrimethoxysilane (A171), dimethyldimethoxysilane, methacryloxypropyltrimethoxysilane (KH570), (3-glycidyloxypropyl)trimethoxysilane (KH560), and trimethoxyphenylsilane (KH631).

In some embodiments, the silane oligomer containing a siloxane group is selected from polymers with a degree of polymerization of 2 to 20 and a viscosity in the range of 10 centipoise to 10,000 centipoise at 25°C, preferably polymers with a viscosity in the range of 10 centipoises to 5000 centipoises at 25°C.

In some embodiments, the silane oligomer containing a siloxane group can be selected from compounds generated and defined by the following structural formulas (A₁, A₂, or products of further condensation between A₁ and A₂ molecules): 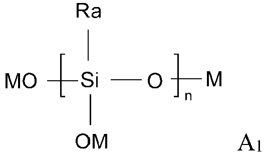 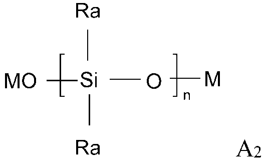 wherein, 2 ≤ n ≤ 20, M can be a methyl group or an ethyl group, and Ra can independently be at least one of a methacryloxypropyl group, a phenyl group, a vinyl group, a (2,3 - epoxypropoxy)propyl group, an alkyl group, an ester group, an ether group, a carbamido group, an epoxy group, or a hydrocarbon group.

According to the technical solution provided by the present invention, Curing Agent B mainly includes a small molecule containing an isocyanate group and/or a polymer containing a monomer containing at least one isocyanate group. A curing agent, also known as a hardener, a curing accelerator or a curing agent, is a substance or a mixture that promotes or controls the curing reaction. The curing of a resin is an irreversible change process of a thermosetting resin through chemical reactions such as condensation, ring-closing, addition or catalysis, etc. Curing is accomplished by adding a curing (cross-linking) agent. The curing agent is an essential additive, which is required for adhesives, coatings and casting material. The variety of curing agents has a great influence on the mechanical properties, heat resistance, humidity resistance, corrosion resistance, etc. of a cured product.

In some embodiments, Curing Agent B is in a liquid state in the range of - 50°C to 100°C.

In some embodiments, the small molecule containing an isocyanate group can be selected from an aromatic isocyanate or an aliphatic isocyanate; the polymer containing a monomer containing at least one isocyanate group can be selected from an aromatic isocyanate polymer or an aliphatic isocyanate polymer.

In some embodiments, the small molecule containing an isocyanate group is preferably selected from an aromatic isocyanate, and the polymer containing a monomer containing at least one isocyanate group is preferably selected from an aromatic isocyanate polymer.

In some embodiments, the viscosity of the polymer containing a monomer containing at least one isocyanate group is less than 10,000 at 25°C centipoises, preferably less than 3000 centipoises.

In some embodiments, the molecular weight of the polymer containing a monomer containing at least one isocyanate group is selected from the range of 150 to 5000 g/mol, preferably from 150 to 2000 g/mol.

In some embodiments, the amount of Base Component A and Curing Agent B are determined according to the relative contents of the key reactive groups thereof. For example, the molar ratio of the siloxane groups of Base Component A to the isocyanate groups of Curing Agent B in the composition can be in the range of 1 to 10, preferably 1 to 5, and more preferably 1.5 to 3, or 1.2 to 3.

According to the technical solution provided by the present invention, Catalyst C is mainly used to catalyze the addition reaction between a hydroxyl group of an alkyl alcohol and an isocyanate group, thereby regulating the rate of the curing process. Regarding the type or amount of the catalyst, those skilled in the art can freely make choices based on their professional knowledge and the requirements of the actual application scenarios. For example, in some scenarios where slow curing is required, one can choose not to add Catalyst C, add a relatively small amount of Catalyst C, or select a Catalyst C with lower catalytic efficiency; while in some scenarios where rapid curing is needed, one can choose to add a relatively large amount of Catalyst C or select a Catalyst C with relatively high catalytic efficiency.

In some embodiments, Catalyst C can be selected from polyurethane catalyst, preferably a metallic salt-based polyurethane catalyst (such as organotin, organobismuth, organozirconium, organocobalt, etc.) or a tertiary amine polyurethane catalyst (such as 2,4,6-tris [(dimethylaminomethyl)] phenol (DMP-30) or 1,8-diazabicyclo[5,4,0]undec-7-ene(DBU)).

In some embodiments, Catalyst C is selected from catalyst having a delay function, preferably a composition formed by a metallic salt-based polyurethane catalyst and its complexing agent.

In some embodiments, the complexing agent is a component that has a complexing effect with the metallic salt-based polyurethane catalyst, and preferably is some volatile, low-toxicity and environment friendly component, such as acetylacetone, methyl acetoacetate or ethyl acetoacetate.

In some specific embodiments, the mass ratio of the metallic salt-based polyurethane catalyst to its complexing agent is 1:(1~1000), preferably 1:(10~1000), and more preferably 1:(50~500). For example, if the metallic salt-based polyurethane catalyst is dibutyltin dilaurate (DBTL) and the complexing agent is acetylacetone, the mass ratio of dibutyltin dilaurate to acetylacetone is 1:(10~1000), and preferably 1:(50~500).

In some embodiments, the amount of Catalyst C can be determined according to the amount of Base Component A or Curing Agent B. For example, the mass ratio of Catalyst C to the coating composition can be no more than 5%, preferably no more than 1%, and more preferably no more than 0.2%.

In some specific embodiments, the coating composition provided by the present invention comprises the following components:
Base Component A, which comprises one or more of methacryloxypropyltrimethoxysilane (KH570),
trimethoxyphenylsilane (KH631), vinyltrimethoxysilane (A171), and (3-glycidyloxypropyl)trimethoxysilane (KH560);
Curing Agent B, which comprises one or more of diphenylmethane diisocyanate (MDI) or its polymers, hexamethylene diisocyanate (HDI) or its polymers, or toluene diisocyanate or its polymers;
Catalyst C, which comprises one or more of dibutyltin dilaurate (DBTL), 2,4,6 - tris(dimethylaminomethyl)phenol (DMP-30), or 1,8 - diazabicyclo[5,4,0]undec - 7 - ene (DBU);
wherein, the molar amount of siloxane groups of Base Component A: the molar amount of isocyanate groups of Curing Agent B = 1:(0.1~1);
the mass ratio of Catalyst C to the coating composition is no more than 5%, preferably no more than 1%, and more preferably no more than 0.2%.

It can be understood that, in some embodiments, Base Component A, Curing Agent B, or Catalyst C respectively can be independently composed of a single substance, or respectively can be a mixture independently composed of two or more substances.

It can be understood that, in some embodiments, the "coating composition" of the present invention can be used to prepare high-solid-content coating compositions, ultra-high-solid-content coating compositions, and/or solvent-free coating compositions, and is particularly suitable for preparing ultra-high-solid-content coating compositions or solvent-free coating compositions. For example, in one embodiment, Base Component A is selected from low-volatility silanes (such as methacryloxypropyltriethoxysilane, epoxypropyltriethoxysilane) or silane oligomers with extremely low VOC emissions, the ratio of the siloxane group of the Base Component A to the isocyanate groups of Curing Agent B is close to 1, and by properly adjusting the proportion of the non-VOC components, a solvent-free coating composition can be prepared.

It should be noted that the selection or addition of specific components in the coating composition has different effects on the curing process (such as dry to hard time, curing temperature, etc.) and the properties of the finally cured paint film (such as weather resistance, corrosion resistance, plasticizing, or compatibilizing properties, etc.). Therefore, those skilled in the art can select or adjust the specific components of the coating composition according to specific real application scenarios or application requirements.

In some embodiments, for scenarios where the paint film requires weather resistance or corrosion resistance, Base Component A can be selected from methacryloxypropyltrimethoxysilane (KH570). For scenarios of room-temperature curing, Base Component A can be selected from trimethoxyphenylsilane (KH631). For scenarios of low-viscosity and low-temperature curing, Base Component A can be selected from silane with a high content of siloxane groups, and preferably vinyltrimethoxysilane (A171). For scenarios where it is difficult to adhere to a substrate (such as nylon substrate), Base Component A can be selected from a silane component rich in epoxy group, and preferably a mixture of methacryloxypropyltrimethoxysilane (KH570) and (3-glycidyloxypropyl)trimethoxysilane (KH560), with the amount ratio of KH570: KH560 = 75~100%: 0~25%. For scenarios of room-temperature/low-temperature curing and a substrate that is difficult to adhere to, Base Component A can be selected from a mixture of methacryloxypropyltrimethoxysilane (KH570), trimethoxyphenylsilane (KH631), and (3-glycidyloxypropyl)trimethoxysilane (KH560), with the amount ratio of KH570: KH631: KH560 = 50~100%: 0~25%: 0~25%, and preferably KH570: KH631: KH560 = 80~100%: 0~10%: 0~10%. For scenarios of low-temperature curing and no methanol emission, Base Component A can be selected from a mixture of methacryloxypropyltriethoxysilane, phenyltriethoxysilane, and (3-glycidyloxypropyl)triethoxysilane, with the amount ratio of methacryloxypropyltriethoxysilane: phenyltriethoxysilane: (3-glycidyloxypropyl)triethoxysilane = 0~50%: 50~100%: 0~50%, and preferably methacryloxypropyltriethoxysilane: phenyltriethoxysilane: (3-glycidyloxypropyl)triethoxysilane = 0~25%: 50~100%: 0~25%. For scenarios of high-temperature curing and no methanol emission (e.g., > 80°C), Base Component A can be selected from silane components with low volatility, preferably a mixture of methacryloxypropyltriethoxysilane and (3-glycidyloxypropyl)triethoxysilane, with the amount ratio of methacryloxypropyltriethoxysilane: (3-glycidyloxypropyl)triethoxysilane = 0~50%: 50~100%, and preferably methacryloxypropyltriethoxysilane: (3-glycidyloxypropyl)triethoxysilane = 0~30%: 70~100%. Among them, the amount ratio of each component in the Base Component A above is determined based on the molar amount of the siloxane group of each component.

In some embodiments, for scenarios of weather resistant paint films, Curing Agent B can be selected from aliphatic isocyanates and/or polymers thereof, such as HDI trimer or HDI uretdione curing agent, such as hexamethylene diisocyanate and its prepolymers (e.g., Covestro N3300, N3600, N3400), isophorone diisocyanate (IPDI) and its prepolymers, dicyclohexylmethane diisocyanate (HMDI) and its prepolymers, or toluene diisocyanate TDI and its prepolymers (e.g., Covestro E14, E15). For scenarios of corrosion resistant paint film, Curing Agent B can be selected from aromatic isocyanates and/or polymers thereof, such as MDI polymers or modified MDI prepolymers, such as polymethylene polyphenyl isocyanate (e.g., Wanhua Chemical PM200), or diphenylmethane diisocyanate or its polymers (e.g., Covestro E21, or Covestro CDC).

In some specific embodiments, for high weather resistance scenarios, Curing Agent B can be a mixture of N3300, N3600, and N3400, with the amount ratio of N3300: N3600: N3400 = 50~100%:0~50%:0~25%, and preferably N3300: N3600: N3400 = 50~100%:0~25%:0~10%; for the high corrosion resistance scenarios, Curing Agent B can be a mixture of PM200, E21, and N3300, with the amount ratio of PM200: E21: N3300 = 50~100%:0~50%:0~50%, and preferably PM200: E21: N3300 = 80~100%:0~20%:0~20%. Among them, the amount ratio of each component in the Curing Agent B above is determined according to the molar amount of isocyanate group of each component.

In some embodiments, especially for scenarios that require slow curing, for example, the coating composition needs to slowly cure naturally within the required time after coating, Curing Agent B is preferably an aromatic isocyanates and/or its polymers, more preferably an MDI polymer or a modified MDI prepolymer, such as polymethylene polyphenyl isocyanate (e.g., Wanhua Chemical PM200), or diphenylmethane diisocyanate or its polymers (e.g., Covestro E21). Generally, in such scenarios, Catalyst C component may not be added as needed.

In some embodiments, for user-friendly scenarios (e.g., long pot life), Catalyst C can be selected from a mixture of dibutyltin dilaurate (DBTL) and acetylacetone; for scenarios that require a rapid-curing, Catalyst C can be selected from a tertiary amine polyurethane catalyst, such as 2,4,6-tris(dimethylaminomethyl)phenol (DMP - 30) or 1,8-diazabicyclo[5,4,0]undec-7-ene (DBU).

In some specific embodiments, when Catalyst C is selected as dibutyltin dilaurate (DBTL), its mass ratio to the coating composition is in the range of 0.01‰ to 10‰, preferably in the range of 0.1‰ to 1‰; when Catalyst C is selected as a mixture of dibutyltin dilaurate (DBTL) and acetylacetone, the mass ratio of dibutyltin dilaurate (DBTL) to acetylacetone is 1:(10~1000), preferably 1:(50~500).

In some embodiments, Functional Component D can also be added to the coating composition, to provide auxiliary functions such as regulating cross-linking reaction, enhancing adhesion to the substrate, improving substrate wetting, plasticizing, compatibilizing, toughening, leveling, anti-sagging, gloss of the paint film, and meeting special functions of the coating.

In some specific embodiments, Functional Component D can be a component with toughening, plasticizing, or compatibilizing functions, preferably hydroxy-terminated polydimethylsiloxane (PDMS) or hydroxyl acrylic resin.

In some other specific embodiments, Functional Component D can be various common auxiliaries for enhancing/improving coating's properties, such as ultraviolet absorbers and/or antioxidants. The ultraviolet absorbers can be selected from BASF Tinuvin 99 - 2, Tinuvin 384 - 2, Tinuvin 928, Tinuvin 1130, Tinuvin CaroProtect, Tinuvin 400, Tinuvin 477, or Tinuvin 479, etc, and the antioxidants can be selected from Antioxidant 264 (BHT), BASF Tinuvin 123, Tinuvin 249, Tinuvin 292, or Tinuvin 5151, etc.

In some embodiments, for scenarios that require flexibility and weather resistance, Functional Component D can be selected as hydroxy-terminated polydimethylsiloxane (PDMS), with a molecular weight of 100 to 2000 g/mol, preferably 100 to 500 g/mol; for scenarios that require flexibility and compatibility, Functional Component D can be selected as hydroxyl acrylic resin; for scenarios that require cross-linking/assisted film-forming, Functional Component D can be selected from bisphenol A diglycidyl ether type epoxy resins, such as one or a combination of E51, E44, E20, or E12.

In some specific embodiments, when Functional Component D is selected as hydroxy-terminated polydimethylsiloxane (PDMS), its mass ratio to the coating composition is in the range of 0 to 30%, preferably in the range of 2% to 20%, and more preferably in the range of 1% to 10%; when Functional Component D is selected as hydroxyl acrylic resin, its mass ratio to the coating composition is in the range of 0.1% to 30%, preferably in the range of 1% to 10%.

In some embodiments, Functional Component D can include common coating additives, such as pigments, fillers, dispersants, thickeners, or defoamers, etc.

It can be understood that, the present invention does not have restrictions on the types or contents of Functional Component D in the coating composition. Those skilled in the art can, based on their professional knowledge, freely make choices according to the requirements of the actual application scenarios. For example, one may choose to add certain substance with specific auxiliary functions, or to add a mixture of several types of substances with the same or different auxiliary functions.

It should be noted that the coating composition of the present invention can be a mixture blended together, or a combination in which some components are physically separated. When at least some of the components exist in a physically separated form, each of different components are stored separately in different containers, or two or more of these components can be mixed and then stored separately from the other components in different containers.

In some embodiments, Base Component A and Curing Agent B in the coating composition of the present invention are stored or packaged in different containers.

In some embodiments, the three components, namely Base Component A, Curing Agent B, and Catalyst C in the coating composition of the present invention, are stored or packaged in different containers respectively.

In some embodiments, the three components, Base Component A, Curing Agent B, and Catalyst C in the coating composition of the present invention are stored or packaged in different containers respectively, Functional Component D in the solvent-free composition can be stored or packaged in a separate container, or can be stored or packaged in a mixture state in the container of Base Component A, Curing Agent B, or Catalyst C.

In a specific embodiment, the three components, Base Component A, Curing Agent B, and Catalyst C in the coating composition are packaged separately. When in use, it includes the step of mixing the separately packaged components in a certain proportion. The mixing step is preferably carried out under conditions that minimize or avoid curing.

The coating composition of the present invention, through physical mixing, is applied to a substrate. After absorbing water molecules, it undergoes a chemical reaction to generate a polysiloxane (main structure) and a polyurethane (or carbamate) plasticizer, thus forming a stable paint film on the surface of the substrate.

Figure 1 shows the production and application process flow of a typical coating composition. First, it is to identify raw materials of each of the components used to prepare the coating composition, and use these raw materials according to certain preparation methods and/or processes for production, which may include steps such as dispersion, grinding, or coloring, etc.; subsequently, it is to conduct quality inspection on the produced products according to preset standards, and products that pass the quality inspection can enter into the packaging process to form coating composition products. For example, one possible product form is to form a product with Base Component A, Curing Agent B, and Catalyst C packaged separately. When using this coating composition product to paint the surface of a substrate, first, the separately packaged components need to be mixed and/or maturated, meanwhile, the surface of the substrate can be pretreated as needed, such as sanding or polishing, etc.; after both the coating composition and the substrate are ready, the coating composition can be applied to the surface of the substrate according to the set application parameters (such as temperature or humidity). After it cures and forms a film, the work is completed.

In some specific embodiments, the components can be uniformly mixed to form a coating composition, which is then applied to the surface of the substrate to form a paint film with a thickness of 5 µm to 1000 µm, preferably 30 to 150 µm. An example of the production conditions can be: the environmental humidity maintained at 5%RH to 95%RH, room temperature (for example, 5 to 40°C), and the dry to hard time of 10 minutes to 6 hours, to form a cured paint film.

In one embodiment, humidification means may also be used to achieve a suitable environmental humidity in the coating workshop, wherein the humidity may be selected as 5%RH to 100%RH, 10%RH to 95%RH, 20%RH to 95%RH, 30%RH to 95%RH, 40%RH to 95%RH, or 50%RH to 95%RH; preferably the humidity is 20%RH to 90%RH. RH, more preferably 30% RH to 75% RH, such as 35% RH, 40% RH, 50% RH, 55% RH, 60% RH, 64% RH, 65% RH, 67% RH, 70% RH, or 75% RH.

In one embodiment, low-temperature heating means may also be used to achieve a suitable environmental temperature in the coating workshop, and the upper limit of the temperature may be reasonably adjusted according to factors such as volatility of silanes, anti-sagging of the coating, curing shrinkage, and appearance, etc., and heating energy consumption and benefits are also weighed in the real production process. Specifically, the temperature may be from 20 to 80°C, preferably from 40 to 80°C, such as 45°C, 50°C, 55°C, 60°C, 65°C, 70°C or 75°C.

Some optional application parameters are illustrated below.

In a specific embodiment, the following application parameters can be used for large size workpieces when heating conditions are restricted:
(1) Thickness of the wet film is 50 to 100 µm;
(2) Catalyst Content: dibutyltin dilaurate (0.1 ‰ to 1 ‰ by total weight), DMP-30 or DBU (0.1 ‰ to 1 ‰ by total weight), acetylacetone (0.5% to 5% by total weight);
(3) Application temperature: 0°C to 40°C (temperature is not controlled, so the actual temperature depends on the temperature in the workshop at the time of application);
(4) Application humidity: 5%RH to 95%RH, preferably 20%RH to 90%RH, more preferably 30%RH to 70%RH.

In a specific embodiment, for scenarios where fast curing is required but heating conditions are restricted, the following application parameters can be used:
(1) Thickness of the wet film is 30 to 50 µm;
(2) Catalyst: DMP-30 or DBU (0.5% to 1% by total weight); dibutyltin dilaurate (0.5% to 1% by total weight);
(3) Application temperature: 5°C to 40°C (temperature is not controlled, so the actual temperature depends on the temperature in the workshop at the time of application);
(4) Application humidity: 5%RH to 95%RH, preferably 20%RH to 90%RH, more preferably 30%RH to 70%RH.

In a specific embodiment, for scenarios where fast curing is required and heat curing is allowed, the following application parameters can be used:
(1) Thickness of the wet film is 50 to 150 µm;
(2) Catalyst: dibutyltin dilaurate (0.1 ‰ to 1 ‰ by total weight): acetylacetone (0.5% to 5% by total weight);
(3) Application temperature: Heated to 40°C to 80°C;
(4) Application humidity: 5%RH to 95%RH, preferably 20%RH to 90%RH, more preferably 30%RH to 70%RH.

It is to be noted that the paint films obtained based on the coating compositions of the present invention have the following performance advantages compared with typical commercially available coating product systems (e.g., epoxy, polyurea, and polyurethane):

| | **Viscosity** | **Pot life** | **Curing Rate** | **Corrosion/weather Resistance** |
|---|---|---|---|---|
| **Present Invention** | Low | Long | Fast, adjustable based on needs | Good corrosion resistance and excellent weather resistance. |
| **Epoxy (Bisphenol F + modified fatty amine)** | Moderate | Moderate to Short | Average | Excellent corrosion resistance, but poor weather resistance. |
| **Epoxy (Silane Modified)** | Moderate | Moderate | Fast | Excellent corrosion resistance, and mediocre weather resistance. |
| **Polyurea - Primary amine** | Moderate to High | Extremely Short | Extremely Fast | Excellent |
| **Polyurea - Secondary amine** | Moderate to High | Moderate to Short | Average | Excellent |
| **Polyurethane (Polyhydric alcohol + isocyanate)** | Moderate | Moderate to Short | Fast | Average |

It should be emphasized that the coating composition of the present invention offers significant advantages over common polyurethane (polyhydric alcohol + isocyanate) coating systems. For example, compared to high-solid, ultra-high-solid, or even solvent-free polyurethane systems, the coating composition of the present invention has lower viscosity, allowing for a longer and controllable pot life, which facilitates its application; compared to organic solvent-based polyurethane systems, the coating composition of the present invention has extremely low VOC content, addressing the pollution issues caused by organic solvent evaporation and making it more environment friendly; compared to water-based polyurethane systems, the coating composition of the present invention increases the thickness of a single layer of the coating without the need for water dilution, overcoming the solubility issues of certain organic substances in water, and resolving the disadvantage of low application efficiency of water-based polyurethane due to low solid content.

Additionally, the present invention provides a coated material product, comprising a substrate and a coating in contact with the surface of the substrate, wherein the coating is prepared from the coating composition of the present invention under an aqueous condition.

Additionally, the present invention also provides a coating kit, comprising a substrate and the coating composition of the present invention. Optionally, it may also include an instruction manual for use.

It should be noted that the technical solution of the present invention does not impose specific limitations on the material, shape, structure, surface characteristics, or other aspects of the applicable substrate.

In some embodiments, the substrate may include common structural steel materials and composite materials in the industrial field (for example, epoxy, polyurethane, and unsaturated polyester coatings, which contain pigments and fillers, continuous fiber-reinforced epoxy, fiber-reinforced polyurethane, or fiber-reinforced unsaturated polyester, etc.), various engineering plastics, natural organic materials (such as wood), and inorganic construction materials such as cement or concrete.

In some embodiments, the substrate may have any thickness; the surface of the substrate can be smooth, substantially smooth, or textured; the substrate may have a regular or irregular shape.

It should be noted that the coated material products or solvent-based coating kits of the present invention may be independently applicable to a variety of industries without specific limitations, including but not limited to office supplies industry, electronics and electrical appliances industry, and construction industry.

In some embodiments, to ensure good adhesion between the paint film and the substrate, the surface of the substrate can be pre-treated before applying the coating composition; for example, after removing impurities and oil stains, the surface may be subjected to physical sandblasting, grinding, or plasma treatment.

Additionally, the present invention provides a method of using the coating composition, which includes the step of applying the coating composition of the present invention onto the surface of a substrate under an aqueous condition.

In some embodiments, the method of using the coating composition includes the following steps:
S1: Uniformly mix the components of the coating composition;
S2: Uniformly apply the uniformly mixed coating composition from step S1 onto the substrate;
S3: Set an appropriate humidity to cure the coating;
S4: Allow the coating composition to cure, thereby forming a paint film.

In some embodiments, the method of using the coating composition includes the following steps:
S1: Uniformly mix the components of the coating composition;
S2: Uniformly apply the uniformly mixed coating composition from step S1 onto the substrate;
S3: Allow the coating composition to cure, thereby forming a paint film;

As necessary, before step S3, certain curing parameters (such as temperature and humidity) can be set to meet the environmental requirements needed for the curing of the coating.

Further, the present invention also provides products coated with the coating prepared by the methods described above.

The curing mechanism of the coating system of the present invention is likely to be as follows:
Step 1, the silane or its oligomers containing siloxane groups of Base Component A react with water molecules in the air to form silanol and alkyl alcohol: 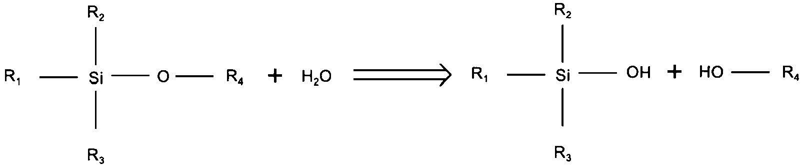
Step 2, the isocyanate groups of Curing Agent B rapidly undergo an addition reaction with the alkyl alcohol produced in Step 1, catalyzed by Catalyst C, to form (poly)urethane alkyl esters. As the alkyl alcohol from Step 1 is consumed, the reaction in Step 1 proceeds forward rapidly, meaning that the reaction in Step 2 strongly promotes the reaction in Step 1: 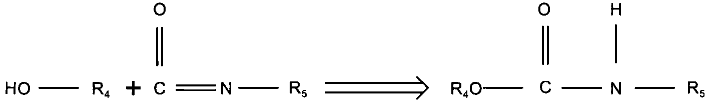
Step 3, under the promoting effect of Step 2, a significant amount of silanol, a product from Step 1, is formed. The silanols can condense with each other, releasing water molecules and forming silicon-oxygen-silicon covalent bonds, which constitute the polysiloxane backbone.

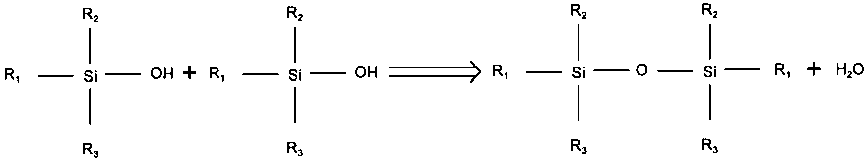

Alternatively, the silanol may undergo an addition substitution reaction with the siloxane groups of the Base Component A, forming silicon-oxygen-silicon covalent bonds, i.e., polysiloxane backbone structure, while releasing new alkyl alcohol.

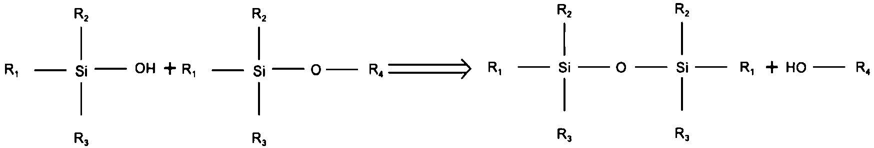

Step 4, the water molecules and alkyl alcohols generated from the above reactions participate again in Step 1 to 3, leading to the formation of more polysiloxane backbone structures. The proportion of the backbone structure increases as the reaction progresses, eventually forming a highly cross-linked cured paint film with polysiloxane as the main component.

The applicant of the present invention believes that water molecules preferentially react with Base Component A of the present invention as described in Step 1, rather than extensively reacting with the isocyanate groups of Curing Agent B.

It can be seen that compared to prior art (for example, using Base Component A alone as the coating material is one of the typical applications of commercial single-component organosilicon coatings), the alkyl alcohols generated in the technical solution of the present invention will further react with the isocyanate groups of Curing Agent B to form alkyl urethane components that remain in the paint film (Step 2), thereby avoiding environmental pollution caused by VOC emissions and meeting the standards for solvent-free/ultra-high solid content/high solid content. At the same time, the alkyl urethane components help to increase the adhesion between the coating and the substrate, making the applicability of the technical solution of the present invention to various substrates equivalent to that of common polyurethane systems, which is superior to common single-component organosilicon commercial product systems.

It should be understood that the above is only an explanation of the technical solution and technical effects of the present invention from a mechanism perspective and does not thereby limit the protection scope of the present invention.

The technical solution and technical effects of the present invention are further illustrated by the following specific embodiments and comparative ones.

### Embodiment 1: Preparation of Coating Compositions 1-1 to 1-18

The components according to the substances and their contents as specified in Table 1 are used to prepare the corresponding coating composition.

Wherein, the molar content of the substance of Base Component A is calculated based on the molar content of siloxane groups thereof, the molar content of the substance of Curing Agent B is calculated based on the molar content of isocyanate groups thereof, and the contents of Catalyst C and Functional Component D are calculated based on their mass fractions in the coating composition respectively.

**Table 1: Formulations of Coating Compositions (1-1 to 1-18)**

| | **Base Component A Substance (molar content)** | **Curing Agent B Substance (molar content)** | **Catalyst C Substance (mass fraction)** | **Functional Component D Substance (mass fraction)** | **Molar ratio of Base Compone nt A to Curing Agent B** |
|---|---|---|---|---|---|
| 1-1 | KH570 (3) | Wanhua Chemical PM200 (2) | / | / | 1.5 |
| 1-2 | KH570 (3) | Covestro CDC (2) | / | / | 1.5 |
| 1-3 | KH570 (3) | Covestro N3300 (1.5) | DBTL (1‰) | / | 2 |
| 1-4 | KH631 (3) | Covestro N3300 (1.5) | DBTL (1‰) | / | 2 |
| 1-5 | KH560 (3) | Covestro N3300 (1.5) | DBTL (1‰) | / | 2 |
| 1-6 | LA2388 (3) | Covestro N3300 (1.5) | DBTL (1‰) | / | 2 |
| 1-7 | SH3047 (3) | Covestro N3300 (1.5) | DBTL (1‰) | / | 2 |
| 1-8 | KH570 (3) | Wanhua Chemical PM200 (2) | DBTL (0.1‰) | / | 1.5 |
| | | | Acetylaceton e (1%) | | |
| 1-9 | KH570 (3) | Covestro E21 (2) | DBTL (0.1‰) | / | 1.5 |
| | | | Acetylacetone (1%) | | |
| 1-10 | KH570 (3) | Covestro CDC (2) | DBTL (0.1‰) | / | 1.5 |
| | | | Acetylacetone (1%) | | |
| 1-11 | KH570 (3) | dicyclohexylm ethane diisocyanate (2) | DBTL (0.1‰) | / | 1.5 |
| | | | Acetylacetone (1%) | | |
| 1-12 | KH570 (3) | Covestro N3300 (3) | DBTL (0.1‰) | / | 1 |
| | | | Acetylacetone (1%) | | |
| 1-13 | KH570 (3) | Covestro N3300 (2) | DBTL (0.1‰) | / | 1.5 |
| | | | Acetylacetone (1%) | | |
| 1-14 | KH570 (3) | Covestro N3300 (1) | DBTL (0.1‰) | / | 3 |
| | | | Acetylacetone (1%) | | |
| 1-15 | KH570 (3) | Covestro N3300 (0.6) | DBTL (0.1‰) | / | 5 |
| | | | Acetylacetone (1%) | | |
| 1-16 | KH570 (3) | Covestro N3300 (0.3) | DBTL (0.1‰) | / | 10 |
| | | | Acetylacetone (1%) | | |
| 1-17 | KH570 (3) | Covestro N3300 (1.5) | DMP-30(1‰) | / | 2 |
| 1-18 | KH570 (3) | Covestro N3300 (1.5) | DBTL (1‰) | PDMS (10%) | 2 |

### Embodiment 2: Use of Coating Compositions 1-1 to 1-18

Coating compositions 1-1 to 1-18 are prepared according to the formulations listed in Table 1 to obtain uniform coating mixtures. These coating compositions are applied to the substrate surface, followed by drying and curing to form a paint film. The dry to hard time for each is recorded, as shown in Table 2 below. The method for testing dry to hard time referred to ASTM D 1640.

**Table 2: Curing of Coating Compositions 1-1 to 1-18**

| | **Substrate** | **Temperature and Humidity of Coating Environment** | **Temperature and Humidity of Curing Environment** | **Dry to Hard Time** |
|---|---|---|---|---|
| 1-1 | Tinplate | 22°C, 67%RH | 60°C, 50%RH | 70 minutes |
| 1-2 | Tinplate | 22°C, 67%RH | 60°C, 50%RH | 80 minutes |
| 1-3 | Tinplate | 22°C, 75%RH | 60°C, 50%RH | 20 minutes |
| 1-4 | Tinplate | 21°C, 64%RH | 60°C, 50%RH | 25 minutes |
| 1-5 | Tinplate | 21°C, 64%RH | 60°C, 50%RH | 25 minutes |
| 1-6 | Tinplate | 21°C, 64%RH | 60°C, 50%RH | 30 minutes |
| 1-7 | Tinplate | 21°C, 64%RH | 60°C, 50%RH | 240 minutes |
| 1-8 | Tinplate | 22°C, 67%RH | 60°C, 50%RH | 30 minutes |
| 1-9 | Tinplate | 22°C, 67%RH | 60°C, 50%RH | 20 minutes |
| 1-10 | Tinplate | 22°C, 67%RH | 60°C, 50%RH | 25 minutes |
| 1-11 | Tinplate | 21°C, 64%RH | 60°C, 50%RH | 195 minutes |
| 1-12 | Tinplate | 21°C, 64%RH | 60°C, 50%RH | 35 minutes |
| 1-13 | Tinplate | 21°C, 64%RH | 60°C, 50%RH | 30 minutes |
| 1-14 | Tinplate | 21°C, 64%RH | 60°C, 50%RH | 20 minutes |
| 1-15 | Tinplate | 21°C, 64%RH | 60°C, 50%RH | 30 minutes |
| 1-16 | Tinplate | 21°C, 64%RH | 60°C, 50%RH | 30 minutes |
| 1-17 | Tinplate | 21°C, 64%RH | 60°C, 50%RH | 240 minutes |
| 1-18 | Tinplate | 22°C, 75%RH | 60°C, 50%RH | 30 minutes |
| 1-3 (low humidity) | Tinplate | 22°C, 75%RH | 60°C, 10%RH | 45 minutes |

According to the data in Table 2, within the scope of the technical solution disclosed in the present invention, by altering the types and ratios of Base Component A and Curing Agent B, the coating compositions 1-1 to 1-18 and 1-3 (low humidity) can all successfully cure to form paint films under certain temperature and humidity conditions. Among them, by comparing the data of coating compositions 1-1 and 1-8, as well as 1-2 and 1-10, it can be found that the addition of an appropriate amount of catalyst to the formulation of the coating composition can significantly promote the efficiency of curing to form a paint film. By comparing the data of coating compositions 1-3 to 1-7, it can be observed that the selection of different types of Base Component A can regulate the dry to hard time of the paint film formation to a certain extent, among which the dry to hard time is relatively short when KH570, KH631, and KH560 are used as Base Component A. By comparing the data of coating compositions 1-8 to 1-11, it can be found that the selection of different types of Curing Agent B also has a certain effect on adjusting the dry to hard time of the paint film formation, among which the dry to hard time is longer when dicyclohexylmethane diisocyanate is used as Curing Agent B (suitable for slow curing scenarios). By comparing the data of coating compositions 1-12 to 1-16, it is noted that when the ratio of Base Component A to Curing Agent B changes within the range of 1 to 10, a paint film can be cured. By comparing the data of coating compositions 1-3 and 1-17, it can be seen that the type of catalyst selected has a significant impact on regulating the dry to hard time of the paint film formation. By comparing the data of coating compositions 1-3 and 1-18, it can be found that the addition of an appropriate amount of Functional Component D to the coating composition brings additional performance to the paint film, while having slight effect on the dry to hard time. By comparing the data of coating composition 1-3 and 1-3 (low humidity), it is noted that the coating composition of the present invention can still successfully cure to form a paint film under an environmental humidity as low as 10%RH, and changing the environmental humidity has a certain regulatory effect on the dry to hard time of the paint film, generally speaking, the higher the humidity, the faster the curing rate.

### Embodiment 3: Preparation of Coating Compositions 1-19 to 1-22

The coating compositions 1-19 to 1-22 are prepared according to the substances and contents listed in Table 3, where "parts" refers to parts by mass.

**Table 3: Formulations of Coating Compositions (1-19 to 1-22)**

| | **Base Component A** | **Curing Agent B** | **Catalyst C** | **Functional Component D** |
|---|---|---|---|---|
| 1-19 | KH570 (248 parts) | Covestro N3300 (280 parts) | DBTL (0.5 parts) | Titanium Dioxide (83 parts) |
| | | | Acetylacetone (11 parts) | 4A Molecular Sieve (22 parts) |
| | | | | Dispersant (5 parts) |
| | | | | Thickener (5 parts) |
| | | | | Hydroxyl 9% PDMS (55 parts) |
| 1-20 | KH570 (248 parts) | Covestro N3300 (248 parts) | DBTL (0.5 parts) | Carbon Black (5 parts) |
| | | | | Dispersant (5 parts) |
| | | | | Allnex 1198 (15 parts) |
| | | | | UV Absorber (1.5 parts) |
| | | | | Antioxidant (1.5 parts) |
| 1-21 | KH570 (248 parts) | Wanhua Chemical PM200 (270 parts) | DBTL (0.01 parts) | Titanium Dioxide (158 parts) |
| | | | Acetylacetone (5 parts) | 4A Molecular Sieve (15 parts) |
| | | | | Dispersant (5 parts) |
| | | | | Thickener (1.5 parts) |
| | | | | E20 Epoxy Resin (104 parts) |
| 1-22 | KH570 (248 parts) | Wanhua Chemical PM200 (420 parts) | DBTL (0.5 parts) | Hydroxyl 9% PDMS (82 parts) |

### Comparative Example 1: Preparation of Common Coating Compositions (D1, D2, and D3)

The respective coating compositions D1, D2, and D3 are prepared by formulating the components according to the substances and their contents listed in Table 4, wherein the numbers in parentheses indicate the mass fraction of each component in the coating composition.

**Table 4: Formulations of Common Coating Compositions (D1, D2, and D3)**

| | **Base component** | **Curing agent** | **Others** |
|---|---|---|---|
| D1 (2 Component Epoxy) | Bisphenol F epoxy resin (20%) | Modified Aliphatic Amine (20%) | Barium sulfate (36%) |
| | | | Titanium Dioxide (6.4%) |
| | Reactive Diluents (5.6%) | Phenalkamine Modified with Cardanol (4%) | Dispersant (0.4%) |
| | petroleum hydrocarbon resin (2.4%) | | Defoamer (0.4%) |
| | silane coupling agent (4%) | | Catalyst (0.2%) |
| D2 (2 Component Polyurethane) | Covestro NH1420 (50%) | Covestro N3600 (35%) | Titanium Dioxide (15%) |
| | | | Dipropylene Glycol |
| | | | Dimethyl Ether (5%) |
| | | | Dispersant (0.3%) |
| | | | Defoamer (0.3%) |
| D3 (2 Component Fluorocarbon Polyurethane) | Eternal Chemical 3320 (40%) | Covestro BAYHYDOL A 2846 (10%) | Carbon Black (1%) |
| | | | Dipropylene Glycol |
| | Covestro BAYHYDOL A 2846 (40%) | | Dimethyl Ether (2.5%) |
| | | | Dispersant (0.5%) |
| | | | Defoamer (0.3%) |

### Embodiment 4: Use of Coating Compositions 1-19 to 1-22, D1 to D3

In Embodiment 3 and Comparative Example 1, the components of the coating compositions are subjected to dispersion, grinding, and uniform mixing steps, followed by "maturation", that is, after mixing uniformly, waiting for a period of time before application, which is conducive to obtaining better component miscibility, thereby bringing better film-forming properties. After the maturation is completed, coating can be carried out. Among them, D3 is a water-based 2 component fluorocarbon polyurethane coating, which requires the addition of an appropriate amount of deionized water to the coating composition to achieve the desired application viscosity before coating. In this embodiment, the volume mixing ratio of D3 coating composition to deionized water is 100: (40~50).

In the workshop, the obtained coating compositions are evenly sprayed onto specific substrates according to the application parameters listed in Table 5. The selection and treatment of the substrates are as recorded in Table 5.

The instruments involved in the coating process are as follows:
Spraying: Small-nozzle compressed-air paint spray gun;
Brushing: Applying with a small brush to the corresponding substrate; among them, D1 and D2 are brushed.
Oven: Electrically heated forced-draft drying oven.

Among them, the dry to hard time: After spraying, record the corresponding dry to hard time in an oven environment with certain temperature and humidity. The test method for dry to hard time refers to ASTM D 1640.

**Table 5: Application Parameters**

| | **Substrate** | **Temperat ure of Coating Environm ent** | **Humidity of Coating Environm ent** | **Coating Thickne ss** | **Dry to hard time** | **Complete Curing Time** |
|---|---|---|---|---|---|---|
| 1-19 | Fiberglass reinforced epoxy material, surface sanded to a matt finish. | 18°C | 40%RH | 125±25 µm | Approx. 45 min (60°C, 10%RH oven) | 1 hour oven (60°C) + 7 days natural drying |
| 1-19 | Fiberglass reinforced epoxy material, surface sanded to a matt finish. | 18°C | 40%RH | 125±25 µm | Approx. 10 min (60°C, 50%RH oven) | 1 hour oven (60°C) + 7 days natural drying (25°C) |
| D1 | Fiberglass reinforced epoxy material, surface sanded to a matt finish. | 20°C | 45%RH | 125±25 µm | Approx. 60 min (60°C, 10%RH oven) | 1 hour oven (60°C) + 7 days natural drying (25°C) |
| D2 | Fiberglass reinforced epoxy material, surface sanded to a matt finish. | 20°C | 40%RH | 125±25 µm | Approx. 12 min (60°C, 10%RH oven) | 1 hour oven (60°C) + 7 days natural drying |
| 1-20 | Phosphated iron plate material, surface sanded to a matt finish. | 17°C | 35%RH | 90±25 µm | Approx. 50 min (60°C, 10%RH oven) | 1 hour oven (60°C) + 7 days natural drying (25°C) |
| D3 | Phosphated iron plate material, surface sanded to a matt finish. | 20°C | 50%RH | 60±10 µm | Approx. 30 min (60°C oven) | 1 hour oven (60°C) + 7 days natural drying (25°C) |
| 1-21 | Carbon steel Q235 material, surface blasted to SA2.5 and coated with 20 µm thick M116-9080 water-based zinc-rich primer. | 25°C | 45%RH | 80±20 µm | Approx. 50 min (60°C, 10%RH oven) | 1 hour oven (60°C) + 7 days natural drying (25°C) |
| D1 | Carbon steel Q235 material, surface blasted to SA2.5 and coated with 20 µm thick M116-9080 water-based zinc-rich primer. | 25°C | 45%RH | 80±20 µm | Approx. 60 min (60°C, 10%RH oven) | 1 hour oven (60°C) + 7 days natural drying (25°C) |
| 1-22 | Carbon steel Q235 material, surface untreated. | 17°C | 40%RH | 75±15 µm | Approx. 30 min (80°C, 10%RH oven) | 50 min oven (80°C) + 7 days natural drying (25°C) |
| D1 | Carbon steel Q235 material, surface untreated. | 17°C | 40%RH | 90±25 µm | Approx. 60 min (60°C, 10%RH oven) | 1 hour oven (60°C) + 7 days natural drying (25°C) |

From the application parameters in Table 5, it can be seen that all coating compositions can cure to form paint films under certain application parameters. By comparing the two sets of data of 1-19, the technical solution of the present invention can also flexibly adjust the dry to hard time required to form a paint film by changing the environmental conditions. For example, under the same conditions, by adjusting the humidity of the oven from 10% RH to 50% RH, the dry to hard time can be significantly reduced.

### Embodiment 5: application performance measurement of coating compositions 1-19 to 1-22, D1 to D3

Through experimental measurements, the application performance parameters of the coating compositions 1-19 to 1-22 and D1 to D3 are obtained as shown in Table 6 below.

**Table 6: Application Performance of Each Coating Composition**

| | **Substrate** | **Initial Mixing Viscosity (KU)** | **Maximum thickness for single layer by spray (microns)** | **Pot life (35°C)** | **Solids Content** |
|---|---|---|---|---|---|
| 1-19 | Fiberglass reinforced epoxy material, surface sanded to a matt finish. | Approx. 50 | >200 | 1.5~2 hours | Approx. 94% |
| 1-20 | Phosphated iron plate material, surface sanded to a matt finish. | Approx. 45 | >200 | >1 hour | / |
| 1-21 | Carbon steel Q235 material, surface blasted to SA2.5 and coated with 20 µm thick M116-9080 water-based zinc-rich primer. | Approx. 50 | >200 | 45 min~1.5 hours | Approx. 93% |
| 1-22 | Carbon steel Q235 material, surface untreated. | Approx. 50 | >200 | / | Approx. 92% |
| D1 | Fiberglass reinforced epoxy material, surface sanded to a matt finish. | Approx. 80 | >200 | <40 min | Approx. 96% |
| D1 | Carbon steel Q235 material, surface blasted to SA2.5 and coated with 20 µm thick M116-9080 water-based zinc-rich primer. | Approx. 80 | >200 | <40 min | Approx. 96% |
| D1 | Carbon steel Q235 material, surface untreated. | Approx. 80 | >200 | <40 min | Approx. 96% |
| D2 | Fiberglass reinforced epoxy material, surface sanded to a matt finish. | Approx. 80 | >200 | <8 min | Approx. 94% |
| D3 | Phosphated iron plate material, surface sanded to a matt finish. | Approx. 80 (with deionized water added) | 60 | / | Approx. 50% |

The application performance parameters are obtained through the following measurement steps or calculation methods:
Initial Mixing Viscosity: The viscosity of the system is measured within 5 to 10 minutes after mixing the components into the coating composition to obtain the initial mixing viscosity. The method for measuring viscosity is the Stormer viscometer method (in accordance with GB/T 9269-2009), and the unit of the measured viscosity value is Krebs units (KU).

Maximum thickness for single layer by spray: Under the premise that the appearance and performance of the paint film meet the standards, the thickest paint film that can be applied in a single spray is determined, and the thickness of corresponding dry film is the Maximum thickness for single layer by spray. Wherein, when the single sprayable thickness reaches 200 micrometers, if the appearance and performance of the paint film still meet the standards, the test will stop, and it is concluded that the maximum thickness for single layer by spray of the coating composition exceeds 200 micrometers.

Pot life: The paint mixture container is placed in a constant temperature water bath at 35°C and stirred slowly (30 to 120 rounds per minute). The time from the start of mixing the paint to when the rotational viscosity exceeds 85KU is recorded as the pot life. (For D1 and D2, since the initial mixing viscosity is relatively high (close to or greater than 80KU), the pot life is the time from the start of mixing the paint to when it is no longer able to be applied to form a film).

Solids Content: Under the condition of natural drying at room temperature for 7 days, the mass change of the coating composition before and after curing is measured, and the mass fraction after curing to before curing is calculated.

Based on the data in Table 6 above, it can be seen that the technical solution of the present invention has a lower initial mixing viscosity (below 70KU) compared to prior art, which facilitates the application and coating operations. Correspondingly, the pot life of coating compositions 1-19 and 1-21 can reach more than 1 hour, while the pot life of coating compositions D1 and D2 is less than 1 hour, with D2 having a pot life of less than 10 minutes. At the same time, the maximum thickness for single layer by spray of the technical solution of the present invention can reach a level comparable to those of 2 component epoxy system (D1) and 2 component polyurethane systems (D2) in the prior art, which is significantly higher than that of water-based 2 component fluorocarbon polyurethane systems (D3). In addition, the technical solution of the present invention can achieve the level of ultra-high solids coating compositions, with coating compositions 1-19, 1-21, and 1-22 having a solids content of more than 90%.

### Embodiment 6: Measurement of film properties of coating compositions 1-19 to 1-22

Through experimental measurements, the performance data of the above coating compositions after curing and forming paint films on different substrate surfaces are obtained as shown in Table 7 below.

**Table 7: Properties of Films Formed by Each Coating Composition**

| | **Substrate** | **Pull-off Adhesion** | **Cross-Cut Adhesion** | **Impact Resistance** | **Humidity Resistance** | **Corrosion Resistance-Salt Spray** | **UVB Aging Resistance** | **Humid UV Resistance** |
|---|---|---|---|---|---|---|---|---|
| 1-19 | Fiberglass reinforced epoxy material, surface sanded to a matt finish. | ~15MPa | Class 0 | / | / | / | 3000 hours color difference ΔE* <4; Gloss loss rate Approx. 50% | / |
| D1 | Fiberglass reinforced epoxy material, surface sanded to a matt finish. | ~20MPa | Class 0 | / | / | / | 168 hours color difference ΔE* >4; | / |
| D2 | Fiberglass reinforced epoxy material, surface sanded to a matt finish. | ~15MPa | Class 0 | / | / | / | 1500 hours gloss loss rate Approx. 50% | / |
| 1-20 | Phosphated iron plate material, surface sanded to a matt finish. | / | Class 0 | / | / | / | / | At an irradiation dose of 250 kWh/m², powdering begins, with a color difference of ΔE* ≈ 2 ~ 3; |
| | | | | | | | | At an irradiation dose of 300 kWh/m², powdering reaches level 2, with a color difference of ΔE* ≈2 ~3 |
| D3 | Phosphated iron plate material, surface sanded to a matt finish. | / | Class 0 | / | / | / | / | At an irradiation dose of 250 kWh/m², no powdering occurs; the color difference is ΔE* ≈5 ~ 6. |
| 1-21 | Carbon steel Q235 material, surface blasted to SA2.5 and coated with 20 µm thick M116-9080 water-based zinc-rich primer. | / | Class 0 | >50kgcm | / | >240 hours | / | / |
| D1 | Carbon steel Q235 material, surface blasted to SA2.5 and coated with 20 µm thick M116-9080 water-based zinc-rich primer. | / | Class 0 | >50kgcm | / | >240 hours | / | / |
| 1-22 | Carbon steel Q235 material, surface untreated. | / | Class 0~1 | >50kgcm | >480 hours | / | / | / |
| D1 | Carbon steel Q235 material, surface untreated. | / | Class 0~1 | >50kgcm | >480 hours | / | / | / |

Among them, the cross-cut adhesion, pull-off adhesion, or impact resistance tests are mainly used to evaluate the substrate adhesion and flexibility of the paint films; humidity resistance and corrosion resistance-salt spray are primarily used to assess the corrosion resistance of the paint films; UVB aging resistance and humid UV resistance are mainly used to evaluate the weather resistance of the paint films. The performance parameters of each paint film are obtained through the following measurement steps or calculation methods:
The test method for cross-cut adhesion refers to GB/T 9286; the test method for pull-off adhesion refers to GB/T 5210; the test method for impact resistance refers to GB/T 1732; the test method for humidity resistance refers to ISO 6270-2, with a test temperature of 60°C; the test method for corrosion resistance-salt spray refers to ISO9227; the test method for UVB aging resistance refers to Type 1 of GB/T 23981 (4 hours of irradiation at 60°C, followed by 4 hours of spraying at 50°C); humid UV testing is conducted using a 3KW halogen lamp, with the sample temperature ranging from 85 to 130°C, the sample test chamber environmental humidity ranging from 75% RH to 95% RH, and the UV exposure irradiance of the sample being 1000 to 1300 W/m² (the proportion of UVB irradiance is UVB/ (UVA + UVB) ≈3 ~ 5%), and the calculation method for irradiation dose is total irradiance * test time, with the unit being kwh/m².

According to the data in Table 7, the technical solution of the present invention, after conventional formulation adjustments and coating application, can obtain paint films that meet or even exceed the standards of prior art in terms of substrate adhesion, corrosion resistance, and weather resistance, etc. Specifically, by comparing the performance test data of coating compositions 1-19, D1, and D2 on fiberglass reinforced epoxy material with a substrate surface sanded to a matt finish, it can be seen that the pull-off adhesion and cross-cut adhesion of coating composition 1-19 are comparable to prior art, and its UVB aging resistance performance is superior to prior art. By comparing the performance test data of coating compositions 1-20 and D3 on phosphated iron plate material with a substrate surface sanded to a matt finish, it can be seen that the cross-cut adhesion of coating composition 1-20 is comparable to prior art, and its humid UV resistance performance is excellent, with smaller color difference changes under the same irradiation dose. By comparing the performance test data of coating compositions 1-21 and D1 on carbon steel Q235 material with a substrate surface blasted to SA2.5 and coated with a 20-micron-thick M116-9080 water-based zinc-rich primer, it can be seen that its cross-cut adhesion, impact resistance, and corrosion resistance-salt spray can all reach levels comparable to prior art. By comparing the performance test data of coating compositions 1-22 and D1 on carbon steel Q235 material with an untreated surface, it can be seen that its cross-cut adhesion, impact resistance, and humidity resistance can also reach levels comparable to prior art. It is evident that the paint films obtained according to the technical solution of the present invention have excellent performance and high industrial and commercial application value.

The above only are preferred embodiments of the present invention and do not limit the patent scope of the present invention. Any equivalent modifications made based on the invention concept of the present invention, using the content of the specification and drawings, or their direct/indirect applications in other related technical fields, are all included within the patent protection scope of the present invention.

## Claims

1. A coating composition, **characterized in that**, said coating composition comprises the following components:
Base Component A, which comprises a silane small molecule containing a siloxane group and/or a silane oligomer containing a siloxane group, and
Curing Agent B, which comprises a small molecule containing an isocyanate group and/or a polymer containing a monomer containing at least one isocyanate group;
wherein, under normal temperature, pressure and in the absence of a catalyst, said silane small molecule containing a siloxane group and/or said silane oligomer containing a siloxane group does not undergo a one-step addition reaction with said small molecule containing an isocyanate group and/or said polymer containing a monomer containing at least one isocyanate group, or
said silane small molecule containing a siloxane group and/or said silane oligomer containing a siloxane group does not contain an active hydrogen, or
said coating composition remains in a liquid state under an anhydrous condition.

2. Said coating composition of claim 1, further comprising the following component:
Catalyst C, which comprises at least one catalyst capable of catalyzing the addition reaction between a hydroxyl group of an alkyl alcohol and an isocyanate group.

3. Said coating composition of claim 2, wherein:
molar ratio of the siloxane group of said Base Component A to the isocyanate group of said Curing Agent B is from 1 to 10.

4. Said coating composition of claim 2, wherein:
said silane small molecule containing a siloxane group comprises at least one of alkoxysilanes containing a saturated alkyl group, alkoxysilanes containing an ester group, alkoxysilanes containing an aromatic hydrocarbon group, alkoxysilanes containing an unsaturated hydrocarbon group, or alkoxysilanes containing an epoxy group; and/or
said silane oligomer containing a siloxane group is polymerized from at least one type of a monomer containing a siloxane group, with a degree of polymerization of 2 to 20, and a viscosity in the range of 10 centipoise to 10,000 centipoise at 25°C; and/or
said silane oligomer containing a siloxane group comprises ones polymerized from one or more types of monomers selected from alkoxysilanes containing a saturated alkyl group, alkoxysilanes containing an ester group, alkoxysilanes containing an aromatic hydrocarbon group, alkoxysilanes containing an unsaturated hydrocarbon group, or alkoxysilanes containing an epoxy group.

5. Said coating composition of claim 4, wherein:
said silane small molecule containing a siloxane group is selected from one or more of methacryloxypropyltrimethoxysilane, trimethoxyphenylsilane, vinyltrimethoxysilane , (3-glycidyloxypropyl)trimethoxysilane, methyltrimethoxysilane, dimethyldimethoxysilane, dimethoxymethylphenylsilane, diphenyldimethoxysilane, methacryloxypropyltriethoxysilane, triethoxyvinylsilane, phenyltriethoxysilane, (3-glycidyloxypropyl)triethoxysilane, methyltriethoxysilane, diethoxydimethylsilane, diphenyldiethoxysilane, or methylphenyldiethoxysilane.

6. Said coating composition of claim 4, wherein:
said silane small molecule containing a siloxane group is selected from one or more of vinyltrimethoxysilane, dimethyldimethoxysilane, methacryloxypropyltrimethoxysilane, (3-glycidyloxypropyl)trimethoxysilane, or trimethoxyphenylsilane; and/or
said silane oligomer containing a siloxane group comprises ones polymerized from one or more types of monomers selected from vinyltrimethoxysilane, dimethyldimethoxysilane, methacryloxypropyltrimethoxysilane, (3-glycidyloxypropyl)trimethoxysilane, or trimethoxyphenylsilane.

7. Said coating composition of claim 2, wherein:
said small molecule containing an isocyanate group is selected from an aromatic isocyanate or an aliphatic isocyanate; and/or
said polymer containing a monomer containing at least one isocyanate group is selected from an aromatic isocyanate polymer or an aliphatic isocyanate polymer; and/or
the viscosity of said polymer containing a monomer containing at least one isocyanate group is less than 10,000 centipoises at 40°C; and/or
the molecular weight of said polymer containing a monomer containing at least one isocyanate group is selected from the range of 150 to 5000 g/mol.

8. Said coating composition of claim 1, wherein:
said small molecule containing an isocyanate group is selected from an aromatic isocyanate; and/or
said polymer containing a monomer containing at least one isocyanate group is selected from an aromatic isocyanate polymer.

9. Said coating composition of claim 2, wherein:
said Catalyst C is selected from a polyurethane catalyst or a catalyst having a delay function.

10. Said coating composition of claim 9, wherein:
said Catalyst C is selected from a metallic salt-based polyurethane catalyst, a tertiary amine polyurethane catalyst or a composition of a metallic salt-based polyurethane catalyst and its complexing agent.

11. Said coating composition of claim 2, wherein:
said Base Component A comprises one or more of methacryloxypropyltrimethoxysilane, trimethoxyphenylsilane, vinyltrimethoxysilane, or (3-glycidyloxypropyl)trimethoxysilane;
said Curing agent B comprises one or more of diphenylmethane diisocyanate or its polymer, hexamethylene diisocyanate or its polymer, or toluene diisocyanate or its polymer;
said Catalyst C comprises one or more of dibutyltin dilaurate, 2,4,6-tris [(dimethylaminomethyl)] phenol, or 1,8-diazabicyclo[5,4,0]undec-7-ene;
the mass ratio of said Catalyst C to said coating composition is no more than 5%.

12. Said coating composition of claim 2, wherein:
said coating composition further comprises a Functional Component D.

13. Said coating composition of claim 12, wherein:
said Functional Component D comprises a component with toughening, plasticizing, or compatibilizing functions, which is selected from a hydroxyl-terminated polydimethylsiloxane, a hydroxyl acrylic resin, or a bisphenol A based epoxy resin.

14. A coated material product, **characterized in that**, the coated material product comprises a substrate and a coating applied on a surface of said substrate, wherein said coating is prepared from a coating composition of any of claims 1 to 13.

15. A coating kit, **characterized in that**, said coating kit comprises a coating composition of any of claims 1 to 13, wherein said Base Component A and said Curing Agent B of the coating composition are packaged separately.

16. A method of using a coating composition, **characterized in that**, said method comprises following step:
applying a coating composition of any of claims 1 to 13 onto a surface of a substrate under an aqueous condition.
